# EUROPÄISCHE PATENTSCHRIFT

(11) **EP 0 572 839 B1**
(45) Veröffentlichungstag und Bekanntmachung des Hinweises auf die Patenterteilung: **07.08.1996**
(21) Anmeldenummer: 93107868.7
(22) Anmeldetag: 14.05.1993
(51) Int. Cl.: B29C 49/56, B29C 33/22, B29C 45/64

(54) **Schliessvorrichtung für Formen zum Herstellen von Gegenständen aus thermoplastischem Kunststoff**
Mould closing device for making moulded articles from thermoplastic material
Dispositif de fermeture de moule pour la fabrication d'articles moulés en matière thermoplastique

(30) Priorität: 03.06.1992 DE 4218260
(43) Veröffentlichungstag der Anmeldung: 08.12.1993
(73) Patentinhaber: BATTENFELD FISCHER BLASFORMTECHNIK GMBH, D-53842 Troisdorf (DE)
(72) Erfinder: Scharrenbroich, Helmut, D-5206 Neunkirchen-Seelscheid (DE)
(74) Vertreter: Müller, Gerd, Dipl.-Ing.

(56) Entgegenhaltungen:
- EP-A- 0 086 385
- EP-A- 0 481 259
- DE-C- 3 924 182

## Beschreibung

Die Erfindung betrifft eine Schließvorrichtung für Formen zum Herstellen von Gegenständen aus thermoplastischem Kunststoff, insbesondere zum Blasformen von Hohlkörpern auf Blasformmaschinen, mit zwei auf Führungsholmen linear verschiebbar geführten Formaufspannplatten, die durch einen Kraftantrieb, z.B. einen Schließmotor, sowie eine Gleichlaufvorrichtung zueinander gegenläufig bewegbar sind, und mit einem aus mindestens einer Zugstange, einer Druckstange sowie zwei diese an ihren Enden miteinander verbindenden Jochen bestehenden Rahmen, bei dem die Zug- und Druckstangen parallel und die Joche quer zur Verschieberichtung der Formaufspannplatten verlaufen, wobei das eine Joch mit einem Kragarm unmittelbar an der einen Formaufspannplatte angreift, während das andere Joch durch den zwischengeschalteten Kraftantrieb mit der zweiten Formaufspannplatte verbunden ist.

Durch die EP-A2-0 300 223 gehört bereits eine gattungsgemäße Schließvorrichtung zum Stand der Technik, bei der der Rahmen mit dem Kraftantrieb an einem raumfesten Gehäuse aufgehängt ist, das gesonderte, vom Rahmen unabhängige Führungsholme trägt und bei dem die Joche des Rahmens zumindest an den Formaufspannplatten und/oder am zwischengeschalteten Kraftantrieb über Stützglieder angreifen, deren Achsebenen auf der Wirkungslinie der Schließkraft zwischen beiden Formaufspannplatten liegen. Hierdurch wird erreicht, daß die Führung für die Formaufspannplatten und die Mittel zur Schließkraftaufbringung in zweckentsprechender Weise und gleichzeitig platzsparend voneinander entkoppelt werden. Der die Schließkraftübertragung bewirkende Rahmen kann sich deshalb ohne nachteiligen Einfluß auf die Führung der Formaufspannplatten frei verformen. Die exakte gegenläufige Verstellbewegung der Formaufspannplatten bleibt daher auch dann erhalten, wenn sich der Rahmen unter dem Einfluß der Schließkraftwirkung verformt, weil die Gleichlaufvorrichtung an einer Stelle mit diesem Rahmen gekoppelt ist, die keinerlei Verformungskräften unterliegt.

Die Erfindung zielt nun auf die Schaffung einer Schließvorrichtung der eingangs genannten Gattung ab, die unter dem Einfluß der Schließkraftwirkung nicht nur Verformungen des Rahmens zuläßt, sondern diese sogar dazu heranzieht, die hieraus resultierenden nachteiligen Wirkungen im Bereich des Formwerkzeuges und der Führungen zu kompensieren.

Die mit der Erfindung vorgeschlagene Lösung für diese Aufgabe ist dadurch gekennzeichnet, daß das von den Formaufspannplatten entfernte - andere - Joch des Rahmens mit der Druckstange, der Zugstange und dem Kraftantrieb jeweils durch ein normal zur Rahmenebene ausgerichtetes Gelenk in Verbindung steht, während das unmittelbar an der einen Formaufspannplatte über seinen Kragarm angreifende - eine - Joch sowohl mit der Druckstange als auch mit der Zugstange des Rahmens in eine starre Verbindung gebracht ist.

Durch die ausschließlich gelenkige Eingliederung des von den Formaufspannplatten entfernten - anderen - Joches in den Rahmen wird erreicht, daß dieses momentenfrei ist und sich folglich in Richtung der Rahmenebene beliebig schiefstellen kann. Wenn sich daher unter dem Einfluß der Schließkraftwirkung Längungen der Zugstange und Kürzungen der Druckstange des Rahmens einstellen, kann das Joch sich momentenfrei in eine entsprechende Schräglage bewegen, d.h. die Längenunterschiede von Zugstange und Druckstange werden kompensiert, ohne daß sich Rückwirkungen auf das mit Druckstange und Zugstange starr verbundene Joch ergeben können.

Bewährt hat es sich nach der Erfindung auch noch, die Gleichlaufeinrichtung an dem von dem Formaufspannplatten entfernten - anderen - Joch des Rahmens im Gelenk für die Druckstange angreifen zu lassen, sofern diese andererseits gleichzeitig mit dem Gelenk gekoppelt ist, über das der Kraftantrieb an der zweiten Formaufspannplatte angreift. Hierdurch kann erreicht werden, daß die Verschiebung des Formwerkzeugs bezüglich seiner Kalibrierposition unter dem Einfluß der Schließkraftwirkung vernachlässigbar klein bleibt.

In der Zeichnung ist ein Ausführungsbeispiel des Gegenstandes der Erfindung dargestellt. Es zeigen
- Figur 1: in Seitenansicht und teilweise im Längsschnitt eine Schließvorrichtung für Formen zur Herstellung von Hohlkörpern auf Blasformmaschinen,
- Figur 2: eine Schnittansicht in Pfeilrichtung II der Fig. 1,
- Figur 3: eine Schnittansicht in Pfeilrichtung III, während die
- Figuren 4 und 5: in schematisch vereinfachter Darstellung die Systemfunktion der Schließvorrichtung nach Fig. 1 in von der Schließkraftwirkung unbelastetem und in von der Schließkraftwirkung belastetem Zustand wiedergeben.

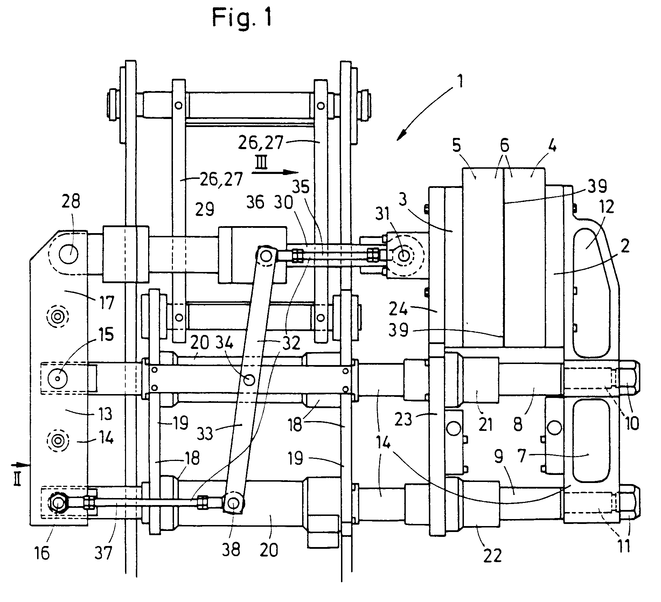

In Fig. 1 der Zeichnung ist eine Schließvorrichtung 1 dargestellt, welche sich für die Zusammenarbeit mit Formen zum Herstellen von Hohlkörpern aus thermoplastischem Kunststoff auf Blasformmaschinen ebenso eignet, wie für die Zusammenarbeit mit Formen, die auf andere Art und Weise, bspw. durch Spritzgießen, zur Herstellung von Gegenständen aus thermoplastischem Kunststoff benutzt werden.

Solche Schließvorrichtungen 1 können in bekannter Weise mit Hilfe eines besonderen Transportsystems, bspw. über Parallelogrammschwingen, zwischen zwei verschiedenen Arbeitsstationen, z.B. einer Schlauchextrusionsstation und einer Blasstation, hin- und herbewegt werden.

Die Schließvorrichtung 1 weist eine erste Formaufspannplatte 2 und eine zweite Formaufspannplatte 3 auf, wobei hieran je eine Formhälfte 4 bzw. 5 befestigt wird.

Die Formaufspannplatte 2 sitzt dabei an einem Joch 7, das am hinteren Ende einer Zugstange 8 und einer Druckstange 9 starr befestigt, bspw. durch je eine Spannverschraubung 10 und 11 verankert ist. Die Zugstange 8 und die Druckstange 9 sind im Abstand parallel zueinander ausgerichtet und erstrecken sich exakt im rechten Winkel zu dem Joch 7, an dessen Kragarm 12 die Formaufspannplatte 2 sitzt. Zugstange 8 und Druckstange 9 greifen mit ihrem anderen Ende jeweils an einem weiteren Joch 13 an und bilden zusammen mit diesem sowie dem Joch 7 einen Rahmen 14. Während aber Zugstange 8 und Druckstange 9 - wie bereits erwähnt - mit dem Joch 7 durch die Spannverschraubungen 10 und 11 jeweils eine in sich starre Verbindung haben, sind sie mit dem Joch 13 jeweils durch ein normal zur Rahmenebene ausgerichtetes Gelenk 15 bzw. 16 in Verbindung gebracht. Auch das Joch 13 ist dabei mit einem Kragarm 17 ausgestattet, und zwar derart, daß sich beide Joche 12 und 17 in gleicher Richtung seitwärts bzw. nach oben vom Rahmen 14 weg erstrecken. Die Zugstange 8 und die Druckstange 9 des Rahmens 14 sind einerseits in einem Gestell 18 gehalten, das aus zwei kongruenten Endplatten 19 und zwei diese auf Abstand miteinander verbindenden Muffenrohren 20 besteht. Andererseits bilden die zum Joch 7 hin aus dem Gestell 18 hinausragenden Abschnitte von Zugstange 8 und Druckstange 9 jedoch noch Führungsholme für verschiebbare Muffenstücke 21 und 22 einer Quertraverse 23 mit einem Ausleger 24, an dem die zweite Formaufspannplatte 3 verankert ist.

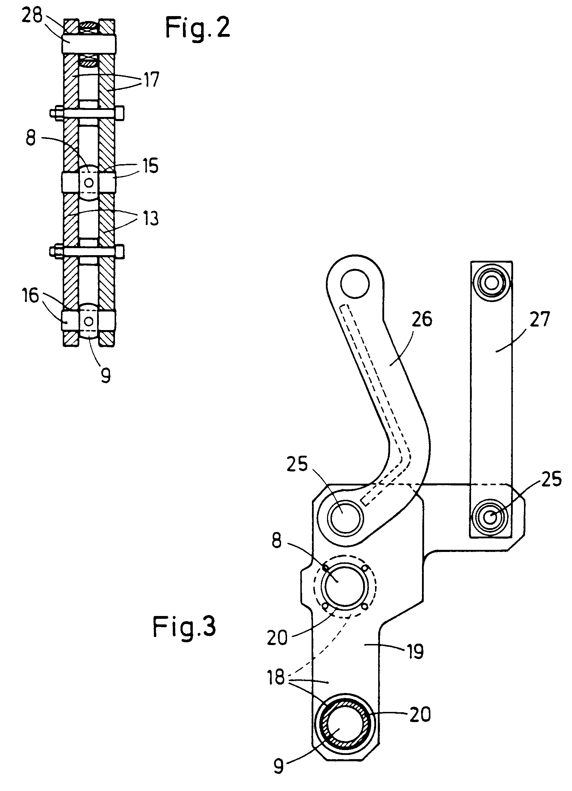

Die Endplatten 19 des Gestells 18 haben gemäß Fig. 3 eine im wesentlichen winkelförmige Gestalt mit einem vertikalen und einem horizontalen Winkelschenkel. Während mit dem vertikalen Winkelschenkel beide Endplatten 19 hin die beiden Muffenrohre 20 in Verbindung stehen, sind in deren horizontalen Schenkel zwei Tragachsen 25 eingesetzt, an denen Parallelogrammschwingen 26 und 27 angreifen, die bspw. in einem (nicht gezeigten) Ausleger aufgehängt sind. Dabei ist aus Fig. 3 ersichtlich, daß die Prallelogrammschwingen 26 eine geschweifte bzw. gekrümmte Gestaltung haben, während die Parallelogrammschwingen 27 gerade ausgeführt sind. Am Kragarm 17 des Joches 13 ist über ein zu den Gelenken 15 und 16 achsparalleles Gelenk 28 ein Kraftantrieb 29, bspw. eine hydraulische oder pneumatische Kolben-Zylinder-Einheit, als Schließmotor aufgehängt. Dessen Kolbenstange 30 greift dabei am Ausleger 24 der Quertraverse 23 an, welche über die Muffenstücke 21 und 22 verschiebbar auf den Längenabschnitten von Zugstange 8 und Druckstange 9 gehalten ist, die nicht nur funktionswesentliche Teile des Rahmens 14 bilden, sondern zugleich auch als Führungsholme für die Quertraverse 23, deren Ausleger 24 und die daran befestigte zweite Formaufspannplatte 3 genutzt sind. Die Verbindung der Kolbenstange 30 des Kraftantriebs 29 mit dem Ausleger 24 der Quertraverse 23 ist über ein Gelenk 31 hergestellt, das wiederum achsparallel zu allen übrigen Gelenken 15, 16 und 28 ausgerichtet ist, die sich am Joch 13 bzw. Kragarm 17 des Rahmens 14 befinden.

Damit die beiden Formaufspannplatten 2 und 3 der Schließvorrichtung 1 und folglich auch die von diesem getragenen Formhälten 4 und 5 des Formwerkzeuges 6 bei Betätigung des den Schließmotor bildenden Kraftantriebs 29 zueinander gegenläufig synchron relativ zu einer vorgegebenen Kalibrierposition bewegt werden können, ist dem Gestell 18 eine Gleichlaufvorrichtung 32 zugeordnet. Diese weist einen gleicharmigen Hebel 33 auf, der um ein Gelenk 34 winkelverschwenkbar am Gestell 18 aufgehängt ist. Der eine Arm dieses gleicharmigen Hebels 33 steht dabei über eine Kuppelstange 35 mit dem Ausleger 24 der Quertraverse 23 in Verbindung, an welchem die Formaufspannplatte 3 sitzt. Dabei greift die Kuppelstange 35 einerseits am Gelenk 31 an, während sie andererseits über ein gleichgerichtetes Gelenk 36 mit dem gleicharmigen Hebel 33 verbunden ist. An dem anderen Arm des zweiarmigen Hebels 33 ist eine weitere Kuppelstange 37 über ein Gelenk 38 angeschlossen, welche wiederum im Gelenk 16 zwischen der Druckstange 9 und dem Joch 13 am Rahmen 14 angreifen. Die Gleichlaufvorrichtung 32 ist damit der Schließvorrichtung 1 so zugeordnet, daß eine unter dem Einfluß der Schließkraftwirkung auftretende Deformation des Rahmens 14 fast nicht zu einer Verschiebung der Formtrennebene relativ zur Kalibrierebene 39-39 führen kann. Diese Verschiebung wird also durch die besondere Anordnung der Gleichlautvorrichtung kompensiert.

Die vorstehend beschriebene Anordnung und Ausbildung des Rahmens 14 der Schließvorrichtung 1 und dessen Zusammenwirken mit den beiden Formaufspannplatten 2 und 3 für die Formhälften 4 und 5 des Formwerkzeugs 6 ist von solcher Art, daß die unter dem Einfluß der Schließkraftwirkung hervorgerufenen Verformungen des Rahmens 14 dazu benutzt werden können, nicht nur einer unerwünschten Schräglage der Formtrennebene entgegenzuwirken, sondern auch einem nachteiligen Versatz der Kalibrierposition aus der Kalibrierebene 39-39 vorzubeugen. Während die Schräglage der Formtrennebene zu einem übermäßigen Verschleiß in den Führungsbuchsen des Formwerkzeugs 6 sowie auch der Schneidkanten innerhalb des Formwerkzeugs 6 führt, trägt ein Versatz der Kalibrierposition zu einem übermäßigen Verschleiß am Blasdorn und zu einer unsauberen Kalibrierung des Vorformlings bei.

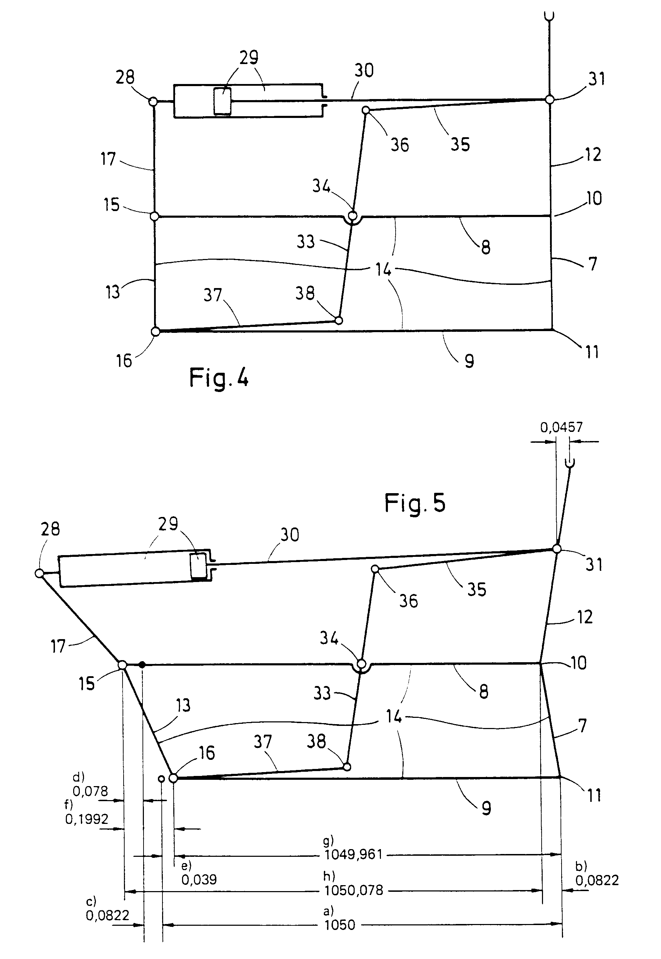

Die Systemfunktion der vorstehend anhand der Fig. 1 bis 3 im einzelnen erläuterten Schließvorrichtung 1 ist besonders deutlich aus den schematischen Darstellungen der Fig. 4 und 5 ersichtlich. Dabei zeigt Fig. 4 die wesentlichen Systemglieder des Rahmens 14 und der Gleichlaufvorrichtung 32 im unbelasteten Zustand, also unbeeinflußt von der durch den Kraftantrieb 29 hervorgebrachten Schließkraftwirkung. Hingegen geht aus Fig. 5 der Zustand der Systemglieder des Rahmens 14 und der Gleichlaufvorrichtung 32 hervor, wenn diese über den Kraftantrieb 29 dem Einfluß der Schließkraftwirkung ausgesetzt sind.

Die in Fig. 5 der Zeichnung beispielhaft eingetragenen Maßangaben sollen dabei verdeutlichen, in welchem Umfang sich unter dem Einfluß der Schließkraftwirkung am Rahmen 14 eine elastische Längung der Zugstange 8, eine elastische Verkürzung der Druckstange 9 und eine Durchbiegung der Joche 7 und 13 einstellt und wie sich dabei diese Verformungen in Richtung zu den Formaufspannplatten 2 und 3 bzw. zum Formwerkzeug 6 hin mit Bezug auf die Kalibrierebenen 39-39 kompensieren.

Diese Wirkungsweise beruht entscheidend auf dem Umstand, daß das von den Formaufspannplatten 2 und 3 entfernte Joch 13 des Rahmens 14 mit der Zugstange 8, der Druckstange 9 und dem Kraftantrieb 29 jeweils durch ein normal zur Rahmenebene ausgerichtetes Gelenk 16, 15, 28 in Verbindung steht, während das unmittelbar an der einen Formaufspannplatte 2 angreifende Joch 7 sowohl mit der Zugstange 8 als auch mit der Druckstange 9 des Rahmens 14 über die Spannverschraubung 10 bzw. 11 in eine starre Verbindung gebracht ist.

Bezüglich der Ausrichtung des die Schließlage einnehmenden Formwerkzeugs 6 auf die Kalibrierebene 39-39 wirkt es sich als vorteilhaft aus, wenn die Gleichlaufvorrichtung 32 einerseits im Gelenk 31 am Ausleger 24 der Quertraverse 23 für die Formaufspannplatte 3 angreift, während sie andererseits an das Joch 13 im Gelenk 16 für die Druckstange 9 angeschlossen ist.

In Fig. 5 der Zeichnung entspricht die Maßangabe a) der Längenabmessung des Gesamtsystems im unbelasteten Zustand. Die Maßangaben b) und c) sind für die Durchbiegung der Joche 7 und 13 im belasteten Zustand eingesetzt. Die Maßangabe d) entspricht der Längung der Zugstange 8 im belasteten Zustand des Systems, während die Maßangabe e) der Kürzung der Druckstange 9 im belasteten Zustand des Systems entspricht. Die Maßangabe f) entspricht der Summe aus den Maßangaben c), d) und e), während die Maßangabe g) aus der Maßangabe a) abzüglich der Maßangabe e) resultiert. Die Maßangabe h) entspricht schließlich dem Ergebnis aus den Maßangaben f) und g) abzüglich der Maßangabe b).

Da das Joch 13 über die Gelenke 15 und 16 mit der Zugstange 8 und der Druckstange 9 sowie der Kragarm 17 über das Gelenk mit dem Kraftantrieb 29 in Kupplungsverbindung steht, können sich Joch 13 und Kragarm 17 im belasteten Zustand des Gesamtsystems in beachtlichem Maße momentenfrei schiefstellen, wie das in übertriebener Form in Fig. 5 der Zeichnung erkennbar ist. Infolgedessen kann dort dann die über die Spannverschraubung 11 hergestellte Verbindung zwischen der Druckstange 9 und dem Joch 7 in entsprechender Weise nach rechts - entsprechend der Maßangabe b) - d.h. die an sich aufgrund der sich unter Belastung einstellenden Längenunterschiede von Zugstange 8 und Druckstange 9 ergebende Schiefstellung des Joches 7 mit dem Kragarm 12 wird kompensiert. Außerdem wird auch die Zugstange 8 momentenfrei und kann sich folglich nicht mehr durchbiegen.

## Patentansprüche

1. Schließvorrichtung für Formen zum Herstellen von Gegenständen aus thermoplastischem Kunststoff, insbesondere zum Blasformen von Hohlkörpern auf Blasformmaschinen, mit zwei auf Führungsholmen linear verschiebbar geführten Formaufspannplatten (2, 3), die durch einen Kraftantrieb, z.B. einen Schließmotor, sowie eine Gleichlaufvorrichtung (32) zueinander gegenläufig bewegbar sind, und mit einem aus mindestens einer Zugstange (8), einer Druckstange (9) sowie zwei diese an ihren Enden miteinander verbindenden Jochen (7, 13) bestehenden Rahmen, bei dem die Zug- und Druckstangen parallel und die Joche quer zur Verschieberichtung der Formaufspannplatten verlaufen, wobei das eine Joch (7) mit einem Kragarm (12) unmittelbar an der einen Formaufspannplatte (2) angreift, während das andere Joch durch den zwischengeschalteten Kraftantrieb mit der zweiten Formaufspannplatte (3) verbunden ist,
**dadurch gekennzeichnet,**
daß das von den Formaufspannplatten (2 und 3) entfernte Joch (13) des Rahmens (14) mit der Zugstange (8), der Druckstange (9) und dem Kraftantrieb (29) jeweils durch ein normal zur Rahmenebene ausgerichtetes Gelenk (15, 16, 28) in Verbindung steht, während das unmittelbar an der einen Formaufspannplatte (2) über seinen Kragarm (12) angreifende Joch (7) sowohl mit der Zugstange (8) als auch mit der Druckstange (9) des Rahmens (14) in eine starre Verbindung (10 bzw. 11) gebracht ist.

2. Schließvorrichtung nach Anspruch 1,
**dadurch gekennzeichnet,**
daß die Gleichlaufvorrichtung (32) an dem von den Formaufspannplatten (2 und 3) entfernten Joch (13) des Rahmens (14) im Gelenk (16) für die Druckstange (9) angreift (37).

3. Schließvorrichtung nach Anspruch 2,
**dadurch gekennzeichnet,**
daß die Gleichlaufvorrichtung (32) mit der zweiten Formaufspannplatte über das gleiche Gelenk (31) in Wirkverbindung steht, an dem auch der als Schließmotor dienende Kraftantrieb (29) angreift.

## Claims

1. Closing device for moulds for making objects of thermoplastic synthetic material, especially for blow moulding hollow bodies on blow moulding machines, with two mould clamping plates (2, 3) which are guided to be linearly displaceable on guide beams and which are movable in opposite sense by a power drive, for example a closing motor, as well as a synchronising device (32) and with a frame which consists of at least one pull rod (8), a pushrod (9) as well as two yokes (7, 13) connecting these together at their ends and in which the pull rod and pushrod extend parallelly and the yokes transversely to the direction of displacement of the moulding clamping plates, wherein the one yoke (7) engages directly at the one mould clamping plate (2) by a cantilever arm (12), whilst the other yoke is connected with the second mould clamping plate (3) by the intermediately connected power drive, characterised thereby that the yoke (13), which is remote from the mould clamping plates (2 and 3), of the frame (14) stands in connection with each of the pull rod (8), the pushrod (9) and the power drive (29) by a respective joint (15, 16, 28) oriented normally to the plane of the frame, whilst the yoke (7), which engages by way of its cantilever arm (12) directly at the one mould clamping plate (2), is brought into a rigid connection (10 or 11) with both the pull rod (8) and the pushrod (9) of the frame (14).

2. Closing device according to claim 1, characterised thereby that the synchronising device (32) engages at the yoke (13), which is remote from the mould clamping plates (2 and 3), of the frame (14) at the joint (16) for the pushrod (9).

3. Closing device according to claim 2, characterised thereby that the synchronising device (32) stands in operative connection with the second mould clamping plate by way of the same joint (31) at which also the power drive (29), which acts as closing motor, engages.

## Revendications

1. Dispositif de fermeture de moules pour la fabrication d'objets en matière synthétique thermoplastique, en particulier pour le soufflage sur matrice de corps creux sur des machines à souffler, présentant deux plateaux porte-outil (2, 3) guidés de manière à pouvoir être déplacés linéairement le long de deux longerons de guidage l'un vers l'autre à l'aide d'un dispositif d'entraînement mécanique, par exemple un moteur de fermeture, ainsi qu'un dispositif de synchronisation (32) et présentant un cadre formé à partir d'au moins une barre de traction (8) et un barre de compression (9) qui sont reliées l'une à l'autre en leurs extrémités par deux barres transversales (7, 13), dans lequel les barres de traction et de compression sont parallèles à la direction de déplacement des plateaux porte-outil et les barres transversales perpendiculaires à celle-ci, une barre transversale (7) s'agrippant directement à l'aide d'un bras en porte-à-faux (12) à un plateau porte-outil (2) alors que l'autre barre transversale est reliée au deuxième plateau porte-outil (3) via le dispositif d'entraînement mécanique intercalé, caractérisé en ce qu'une barre transversale (13) du cadre (14), éloignée des plateaux porte-outil (2 et 3), avec la barre de compression (9), la barre de traction (8) et le dispositif d'entraînement mécanique (29), sont reliés par une articulation (15, 16, 28) perpendiculaire au plan du cadre alors que l'autre barre transversale (7) s'agrippant directement à l'autre plateau porte-outil (2) via son bras en porte-à-faux (12) est reliée de manière fixe (10 ou 11) à la barre de compression (9) ainsi qu'à la barre de traction (8) du cadre (14).

2. Dispositif de fermeture selon la revendication 1, caractérisé en ce que le dispositif de synchronisation (32) s'agrippe (37) à la barre transversale (13) du cadre (14) éloignée des plateaux porte-outil (2 et 3) dans l'articulation (16) pour la barre de compression (9).

3. Dispositif de fermeture selon la revendication 2, caractérisé en ce que le dispositif de synchronisation (32) est relié avec le deuxième plateau porte-outil via la même articulation (31) que celle à laquelle s'agrippe le dispositif d'entraînement mécanique (29) servant de moteur de fermeture.
